# FASCICULE DE BREVET EUROPEEN

(11) **EP 3 389 456 B1**
(45) Date de publication et mention de la délivrance du brevet: **02.08.2023**
(21) Numéro de dépôt: 16809418.3
(22) Date de dépôt: 14.12.2016
(51) Int. Cl.: H04W 4/80, A47J 36/00, A47J 43/04, A47J 43/07, A47J 44/00, A47J 27/00

(54) **PROCÉDÉ DE COMMANDE D'UN APPAREIL DE PRÉPARATION CULINAIRE**
VERFAHREN ZUR STEUERUNG EINES LEBENSMITTELVERARBEITUNGSGERÄTES
CONTROL METHOD FOR A FOOD PROCESSOR APPLIANCE

(30) Priorité: 16.12.2015 FR 1562474
(43) Date de publication de la demande: 24.10.2018
(73) Titulaire: SEB S.A., 69130 Ecully (FR)
(72) Inventeur: BLOND, Laurent, 21200 Beaune (FR); RETIF, François, 21000 Dijon (FR); BEAUDET, Jean-Yves, 53110 Saint-Julien-du-Terroux (FR)
(74) Mandataire: Germain Maureau
(86) Numéro de dépôt international: PCT/EP2016/080928
(87) Numéro de publication internationale: WO 2017/102809

(56) Documents cités:
- WO-A1-2015/051446
- WO-A2-2014/023882
- US-A1- 2011 134 413
- US-A1- 2014 269 154
- US-A1- 2014 345 474

## Description

La présente invention concerne un procédé de commande d'un appareil de préparation culinaire.

Il est connu d'utiliser un appareil de préparation culinaire comprenant au moins un élément fonctionnel apte à exécuter une tâche particulière.

Un élément fonctionnel peut par exemple être un entraineur rotatif agencé pour mélanger au moins un ingrédient dans un récipient de travail de l'appareil de préparation culinaire ou un élément chauffant d'au moins un aliment disposé dans ledit récipient de travail.

Il est également connu d'utiliser un appareil de préparation culinaire disposant d'une entité de commande apte à contrôler l'exécution de ladite tâche et éventuellement apte à interrompre ladite tâche pour la reprendre ensuite si une condition de sécurité n'est pas respectée. Il peut s'agir par exemple de l'ouverture d'un couvercle de fermeture lors de l'exécution d'une tâche par l'appareil de préparation culinaire.

Il est également connu de commander à distance un appareil de préparation culinaire pour le lancement de ladite tâche.

Cette commande à distance est avantageuse car il est permis de déporter une partie de la mémoire et des éléments de commande de l'appareil de préparation culinaire dans un autre élément distant, par exemple un terminal.

Par exemple, le document WO 2015/051446 décrit un procédé dans lequel un script comprenant une recette est envoyé à un appareil culinaire et le document US 2011/134413 décrit un système de surveillance de plaques de cuisson comprenant un capteur infrarouge.

Toutefois déporter les commandes de l'appareil de préparation culinaire à un élément distant a pour conséquence de permettre un démarrage de l'appareil de préparation culinaire à distance.

Ainsi l'utilisateur peut se trouver à distance de l'appareil de préparation culinaire et ne pas le voir bien que le terminal soit apte à lancer une tâche à distance.

Le démarrage de l'appareil de préparation culinaire alors que l'utilisateur peut être dans une autre pièce peut poser des problèmes de sécurité d'utilisation, notamment en fonction de la configuration du voisinage de l'appareil. Un problème de sécurité d'utilisation peut aussi résulter du lancement involontaire d'une tâche.

La présente invention vise à résoudre tout ou partie des inconvénients mentionnés ci-dessus.

A cet effet, la présente invention concerne un procédé de commande interne d'un appareil de préparation culinaire selon la revendication 1.

L'information de commande détermine la tâche qui est ensuite exécutée par l'au moins un élément fonctionnel correspondant. L'appareil de préparation culinaire est agencé pour recevoir cette information de commande et l'exécuter.

Selon l'invention, lorsque l'information de commande provient d'un système distant, la tâche ne s'exécute pas directement suite à l'envoi de l'information de commande à l'appareil de préparation culinaire : une validation par l'intermédiaire de l'interface utilisateur est nécessaire.

Cette disposition permet donc de sécuriser l'utilisation de l'appareil de préparation culinaire car la tâche n'est exécutée qu'après transmission de l'instruction de commande et ensuite de l'instruction confirmative de commande.

Par exemple, lorsque l'information de commande est envoyée par erreur, la tâche n'est pas exécutée et il n'est pas nécessaire de se précipiter sur l'appareil de préparation culinaire pour stopper son exécution.

Selon un autre exemple, lorsque l'information de commande est correctement envoyée mais que l'appareil de préparation culinaire se trouve hors de vue de l'utilisateur, l'exécution de la tâche peut présenter des risques.

Les risques peuvent être par exemple dus à des enfants à proximité de l'appareil de préparation culinaire pouvant être tentés de le en le voyant exécuter la tâche.

Egalement les risques peuvent être dus à d'autres dispositifs disposés à proximité de l'appareil de préparation culinaires et qui pourraient gêner le fonctionnent de l'appareil de préparation culinaire durant l'exécution de la tâche.

Selon un aspect de l'invention, le protocole de communication est un protocole de communication à distance sans contact, de préférence bidirectionnel, par exemple selon un standard de communication permettant un échange bidirectionnel de données par ondes radio.

Selon un aspect de l'invention, le procédé de commande interne de l'appareil de préparation culinaire comprend suite à l'étape de transmission de l'information d'état par l'entité de commande au dispositif d'avertissement, une étape d'émission du signal relatif à ladite information d'état par le dispositif d'avertissement, ledit signal étant un signal physique perceptible par l'utilisateur.

L'utilisateur est donc prévenu de la disposition de l'appareil de préparation culinaire à exécuter une tâche lorsqu'il est à proximité du dispositif d'avertissement.

Selon un aspect de l'invention, le dispositif d'avertissement est ménagé dans ou disposé sur un boitier de l'appareil de préparation culinaire.

Ainsi l'utilisateur se doit d'être à proximité de l'appareil de préparation culinaire pour constater de lui-même que l'appareil est prêt au lancement de la tâche et que cette tâche peut être lancée en toute sécurité.

Selon un aspect de l'invention, le signal physique perceptible par l'utilisateur correspond à un signal sonore et/ou un signal visuel et/ou un signal perceptible par le toucher.

De préférence, le dispositif d'avertissement comprend un haut-parleur et/ou un élément lumineux et/ou un bouton, en particulier un bouton apte à être déplacé entre une position de d'avertissement et une position de non-avertissement.

Selon un aspect de l'invention, l'étape de réception d'une instruction confirmative de commande par l'entité de commande est précédée par une étape d'acquisition de l'instruction confirmative de commande par l'interface utilisateur, ladite acquisition consistant à acquérir une saisie d'un utilisateur.

Ainsi, l'utilisateur se doit d'être à proximité immédiate de l'appareil de préparation culinaire pour lancer l'exécution de la tâche déterminée en procédant à une saisie au niveau de l'interface utilisateur.

Cette disposition participe donc à la sécurité d'utilisation de l'appareil de préparation culinaire car l'utilisateur peut s'assurer de lui-même que l'appareil de préparation culinaire est dans les dispositions optimales pour que la tâche déterminée soit lancée.

Par disposition optimale, on entend par exemple le fait qu'aucun élément perturbateur externe à l'appareil de préparation culinaire ne risque pas d'interrompre le cours de l'exécution de la tâche déterminée une fois lancée.

Selon un aspect de l'invention, la saisie de l'utilisateur correspond à une saisie apte à être détectée par l'interface utilisateur sous forme de détection de mouvement et/ou de détection sonore - de préférence relative à un son particulier ou une parole déterminée - et/ou de détection d'appui sur une portion déterminée de l'interface utilisateur.

Selon un aspect de l'invention, l'interface utilisateur comprend une unité de saisie pourvue d'un détecteur de mouvement et/ou d'un détecteur sonore et/ou d'un détecteur de contact par un utilisateur.

En particulier le détecteur de contact est ménagé dans un bouton apte à être enclenché par l'utilisateur.

Selon un aspect de l'invention, le dispositif d'avertissement est ménagé dans ou disposé sur l'interface utilisateur ou est apte à émettre un signal par l'intermédiaire de l'interface utilisateur.

Ainsi l'avertissement de l'utilisateur lui signalant que l'appareil de préparation culinaire est prêt et le déclenchement de la tâche déterminée peuvent être effectués tous les deux à partir de l'interface utilisateur.

Selon un aspect de l'invention, le dispositif d'avertissement et l'interface utilisateur sont au moins en partie ménagés dans un bouton apte à être sollicité par l'utilisateur.

Selon un aspect de l'invention, l'étape de réception d'une information de commande par l'entité de commande, est suivie par une étape de configuration réalisée par l'entité de commande et consistant à vérifier l'aptitude de et/ou à agencer l'au moins un élément fonctionnel pour l'exécution de la tâche déterminée.

L'étape de configuration correspond à une mise en place ou agencement particulier de l'appareil de préparation culinaire pour l'exécution de la tâche déterminée à venir.

L'étape de configuration n'est donc pas automatiquement suivie du lancement de l'exécution de la tâche déterminée : une instruction confirmative de commande est nécessaire.

Selon un aspect de l'invention, la vérification de l'aptitude de l'au moins un élément fonctionnel à l'exécution de la tâche déterminée correspond à la réalisation d'un contrôle de paramètres par l'entité de commande relatif à l'aptitude dudit au moins un élément fonctionnel à réaliser la tâche déterminer.

De préférence, au moins une partie de des paramètres destinés à être contrôlés sont obtenus par des mesures de capteurs aptes à communiquer avec l'entité de commande, tel que des capteurs de poids, des capteurs de position, ou des capteurs de contrôle de grandeurs physiques telles qu'une tension ou une intensité. Lesdits capteurs sont compris dans l'appareil de préparation culinaire.

Selon un aspect de l'invention, l'agencement de l'au moins un élément fonctionnel pour l'exécution de la tâche déterminée correspond au moins en partie à la mise en place ou disposition d'au moins un élément fonctionnel en une configuration adéquate pour le commencement de la tâche déterminée à accomplir.

Selon un aspect de l'invention, l'instruction de commande est apte à être interprétée par l'entité de commande et comprend notamment une référence interprétable par l'entité de commande comme étant relative à une tâche déterminée.

Ainsi l'instruction de commande peut être une information succincte faisant référence de manière concise à la tâche déterminée. En effet la tâche déterminée peut être complexe et impliquer plusieurs éléments fonctionnels sollicités en même temps ou à tour de rôle selon un schéma précis. Ce schéma peut être compris en mémoire de l'entité de commande.

De manière alternative et selon un autre aspect de l'invention, l'instruction de commande comprend un schéma de fonctionnement relatif à la durée et aux conditions de fonctionnement de l'au moins un élément fonctionnel impliqué dans la réalisation la tâche déterminée.

Ainsi, il est possible de faire exécuter une tâche à l'appareil de préparation culinaire qui n'est pas connue de la mémoire de l'entité de commande. Cette disposition est intéressante car elle permet par exemple de réaliser des tâches particulières de recettes de cuisines qui n'étaient pas connues au moment de la réalisation de l'entité de commande ou qui ont délibérément été considérées comme ne devant pas être enregistrées en mémoire de l'appareil de préparation culinaire.

De manière alternative également, l'instruction de commande peut comprendre une suite de paramètres définissant la tâche à accomplir, les paramètres correspondant par exemple à une durée de cuisson ou un temps de cuisson.

Selon un aspect de l'invention, l'étape de déclenchement de l'exécution d'une tâche déterminée, est suivie par une étape d'exécution de la tâche déterminée par l'au moins un élément fonctionnel déterminé correspondant à l'instruction de commande, la tâche déterminée correspondant à l'exécution par l'au moins un élément fonctionnel déterminé d'au moins une opération élémentaire selon un temps de fonctionnement déterminée et/ou selon une puissance déterminée et/ou selon un réglage déterminé par ledit au moins un élément fonctionnel déterminé.

Après validation de l'utilisateur par l'envoi de l'instruction confirmative de commande, l'appareil de préparation culinaire est apte à exécuter la tâche déterminée dans sa totalité sans qu'il soit nécessaire de lui envoyer d'autres instructions de commande.

Ainsi l'appareil de préparation culinaire est apte à recevoir une instruction de commande, à la stocker en mémoire, puis exécuter la tâche correspondante sans que l'appareil de préparation soit commandé à distance pendant l'exécution de la tâche.

Pendant l'exécution de la tâche déterminée l'appareil de préparation culinaire est maître, c'est-à-dire qu'il contrôle l'exécution de la tâche.

Selon un aspect de l'invention, l'opération élémentaire correspond à une étape de préparation culinaire d'au moins un aliment disposé dans au moins un récipient de travail de l'appareil de préparation culinaire.

La tâche déterminée est réalisée dans un récipient de travail dédié de l'appareil de préparation culinaire. Selon un aspect de l'invention, la tâche déterminée correspond à une étape d'une recette de cuisine.

Selon un aspect de l'invention, l'entité de commande est apte à réaliser l'interruption et/ou la reprise de ladite tâche déterminée durant l'étape d'exécution de la tâche déterminée.

Ainsi l'entité de commande peut interrompre l'exécution d'une tâche par exemple lorsqu'un contrôle de sécurité réalisé par l'entité de commande sur le fonctionnement de l'appareil de préparation culinaire révèle un dysfonctionnement.

Selon un aspect de l'invention, un contrôle de sécurité peut être effectué par un capteur de l'appareil de préparation culinaire dans le but de vérifier si une disposition d'un élément de l'appareil est correcte pour assurer un fonctionnement sécurisé.

Selon un exemple, un capteur peut être apte à vérifier qu'un couvercle de fermeture d'un récipient de travail est bien fermé lors de l'exécution d'une tâche dans ledit récipient de travail.

Lorsque les contrôles de sécurité correspondent à une disposition normale des éléments de l'appareil de préparation culinaire la tâche peut être exécutée depuis le début ou alors reprendre son exécution à l'état d'avancement atteint lorsque la tâche a été interrompue.

Selon un aspect de l'invention, l'entité de commande est apte, durant l'étape d'exécution de ladite tâche déterminée, à vérifier l'aptitude ou la bonne configuration de l'au moins un élément fonctionnel à l'exécution de la tâche déterminée.

Selon un aspect de l'invention, la vérification de l'aptitude de l'au moins un élément fonctionnel à l'exécution de la tâche déterminée correspond à la vérification effectuée pendant l'étape de configuration.

Selon un aspect de l'invention, le procédé de commande interne d'un appareil de préparation culinaire comprend une étape d'émission d'une information de contrôle par l'entité de commande correspondant à une requête de contrôle reçue par l'entité de commande et concernant l'avancement de l'exécution de la tâche déterminée et/ou concernant une anomalie de fonctionnement de l'appareil de préparation culinaire et/ou une conformité de fonctionnement de l'appareil de préparation culinaire.

Selon un aspect de l'invention, une information de commande en provenance du terminal peut comprendre une requête de contrôle. En particulier ladite requête de contrôle correspond à une interrogation de l'entité de commande sur la bonne réception de ladite information de commande.

De préférence, l'information de contrôle est émise selon le protocole de communication.

Ainsi, après réception de l'information de commande, l'appareil de préparation culinaire connait grâce à l'instruction de commande la tâche qu'il doit exécuter et informe de l'avancement de l'exécution de la tâche.

Cette information de contrôle peut par exemple correspondre à un avancement de l'exécution nul lorsque l'exécution de la tâche n'est pas déclenchée.

La présente invention concerne également un appareil de préparation culinaire agencé pour exécuter les étapes du procédé de commande interne tel que décrit précédemment.

Selon un aspect de l'invention, l'appareil de préparation culinaire comprend une entité de commande agencée pour recevoir des informations de commande selon un protocole de communication, au moins un élément fonctionnel apte à être commandé par l'entité de commande et apte à réaliser une tâche, un dispositif d'avertissement étant apte à émettre un signal et une interface utilisateur apte à réaliser d'acquisition de l'instruction confirmative de commande.

La présente invention concerne en outre un procédé de commande d'un appareil de préparation culinaire par un terminal, le terminal étant agencé pour envoyer des informations de commande selon un protocole de communication audit appareil de préparation culinaire, le procédé comprenant les étapes suivantes :
- sélection d'une tâche déterminée destinée à être accomplie par au moins un élément fonctionnel déterminé de l'appareil de préparation culinaire,
- envoi d'une information de commande à destination de l'appareil de préparation culinaire, l'information de commande comprenant une instruction de commande relative à ladite tâche à exécuter.

Ainsi un utilisateur peut choisir une tâche déterminée destinée à être accomplie par un appareil de préparation culinaire distant et commander cet appareil en vue de l'exécution de cette tâche.

Selon un aspect de l'invention, le procédé de commande d'un appareil de préparation culinaire comprend en outre une étape de réception d'une information de contrôle relative à l'avancement de l'exécution de la tâche déterminée en provenance de l'appareil de préparation culinaire.

L'appareil de préparation culinaire commande et contrôle l'exécution de la tâche déterminée. Il est également apte à envoyer une information de contrôle à destination du terminal pour informer ce dernier de l'état d'avancement de l'exécution de la tâche déterminée.

Selon un aspect de l'invention, l'étape de réception d'une information de contrôle est précédée par une étape d'envoi d'une requête de contrôle correspondante par le terminal à destination de l'appareil de préparation culinaire.

De préférence, la requête de contrôle est comprise dans une information de commande, en particulier l'information de commande comprenant en outre une instruction de commande relative à au moins un élément fonctionnel déterminé par l'entité de commande.

Ainsi la requête de contrôle peut être envoyée à tout moment par le terminal et correspond à une mise à jour du statut de l'appareil de préparation culinaire. Il est ainsi possible pour un utilisateur de connaitre à distance par l'intermédiaire du terminal des informations de contrôle relatives à l'état de l'appareil de préparation culinaire.

La requête de contrôle peut également être comprise dans une information de commande envoyée à l'appareil de préparation culinaire. Ainsi tout en envoyant une consigne à l'appareil de préparation culinaire pour la réalisation d'une tâche déterminée, il est possible de se renseigner sur l'état de l'appareil de préparation culinaire. Par exemple il est possible de recevoir une information de contrôle comme quoi le couvercle de fermeture de l'appareil de préparation culinaire est ouvert.

Selon un aspect de l'invention, le terminal est agencé pour recevoir des informations en provenance d'une base de données comprenant une pluralité de tâches destinées à être exécutée par l'appareil de préparation culinaire.

Selon un aspect de l'invention, la base de données est comprise dans un serveur distant du terminal. De préférence le terminal est agencé pour envoyer une requête en récupération d'au moins une information de commande à destination d'un système de gestion de la base de données.

La présente invention concerne également un produit programme d'ordinateur comprenant des instructions de code agencées pour mettre en oeuvre les étapes d'un procédé de commande d'un appareil de préparation culinaire tel que décrit ci-avant, lorsque ledit programme est exécuté sur un processeur d'un terminal.

Selon un aspect de l'invention, le produit programme d'ordinateur est agencé sous forme d'application téléchargeable sur un terminal lorsque ledit programme est exécuté sur un processeur dudit terminal.

La présente invention concerne en outre un terminal comprenant en mémoire les instructions de code d'un produit programme d'ordinateur tel que décrit ci-avant, le terminal comprenant un processeur agencé pour exécuter un tel produit programme d'ordinateur.

La présente invention concerne également un ensemble d'interface et de commande pour appareil de préparation culinaire. Un tel ensemble d'interface et de commande est intégré dans un boitier de l'appareil de préparation culinaire et comprend un circuit de commande.

L'ensemble d'interface et de commande donne satisfaction dans le sens où il est possible de le remplacer par un autre dans le cadre du service après vente. Ainsi si un problème de fonctionnement est dû à la partie contrôle de l'appareil de préparation culinaire, la partie mécanique, qui est en général encore en bon état, peut être conservée.

Toutefois, il n'est pas toujours possible d'équiper l'appareil de préparation culinaire avec la dernière version disponible de l'ensemble d'interface et de commande, cette dernière version possédant plus de fonctions de commande.

En effet, le boitier dans lequel doit être installé l'ensemble d'interface et de commande impose une limite de taille et de forme pour l'ensemble d'interface et de commande. Dans ce cadre, la conception de nouvelles versions de l'ensemble d'interface et de commande est contrainte par le manque de place. En particulier il est difficile d'inclure de nouveaux éléments de contrôle et/ou de commande.

L'invention permet de résoudre tout ou partie des inconvénients mentionnés ci-dessus.

A ce titre, l'invention concerne un ensemble d'interface et de commande pour appareil de préparation culinaire comprenant :
- un circuit de commande agencé pour émettre un signal de commande d'au moins un élément fonctionnel de l'appareil de préparation culinaire,
- un circuit de communication agencé pour communiquer selon un protocole de communication connu, par exemple un protocole de communication bidirectionnel par ondes radio, le circuit de communication étant en outre apte à échanger des informations avec le circuit de commande,
- un support sur lequel sont rapportés ou dans lequel sont ménagés le circuit de commande et le circuit de communication, le support comprenant des fixations à un bâti de l'appareil de préparation culinaire.

L'ensemble d'interface et de commande est facile à manipuler car tous ses éléments sont solidaires. Il est ainsi possible de changer l'ensemble d'interface et de commande d'un appareil de préparation culinaire de manière aisée.

Cette disposition est intéressante car il est possible de faire évoluer l'appareil de préparation culinaire en conservant la partie mécanique et le circuit de commande de l'appareil de préparation culinaire.

La présence d'un circuit de communication est également avantageuse. Les contraintes de géométrie que doit respecter l'ensemble d'interface et de commande ne sont ainsi plus une limite au développement de fonctionnalités de commande et/ou de contrôle.

En effet, la partie commande de l'appareil de préparation culinaire peut ainsi être déportée vers un terminal distant, ce qui permet de gagner de la place dans le boitier.

Selon un aspect de l'invention, le circuit de commande comprend en outre une prise adaptée pour être branchée à un circuit de puissance de l'appareil de préparation culinaire ou à un élément de liaison audit circuit de puissance.

Cette disposition permet de conserver la partie puissance dans le bâti de l'appareil de préparation culinaire. Ainsi lors du changement de l'ensemble d'interface et de commande, l'appareil de préparation culinaire conserve ses éléments fonctionnels et la partie puissance qui alimente ces éléments fonctionnels en énergie électrique.

Selon un aspect de l'invention, l'ensemble d'interface et de commande comprend en outre un panneau de commande rapporté sur ou ménagé dans le support, le panneau de commande étant agencé pour échanger des informations avec le circuit de commande.

Cette disposition permet de faire évoluer les commandes de l'appareil de préparation culinaire. Les commandes peuvent également évoluer avec chaque nouvelle version de l'ensemble d'interface et de commande.

Selon un aspect de l'invention, le panneau de commande comprend une interface utilisateur. De préférence, l'interface utilisateur comprend un ensemble de boutons, un détecteur de mouvement et/ou un dispositif d'acquisition sonore.

Selon un aspect de l'invention, l'interface utilisateur comprend un dispositif d'avertissement. En particulier, le dispositif d'avertissement comprend un écran d'affichage et/ou un voyant lumineux.

Selon un aspect de l'invention, l'ensemble d'interface et de commande comprend en outre un accéléromètre rapporté sur ou ménagé dans le support. Cette disposition permet de détecter le déplacement de l'appareil de préparation culinaire lors de son fonctionnement.

Il est ainsi possible d'arrêter le fonctionnement de l'entraineur rotatif lorsqu'un déplacement est détecté de manière à éviter par exemple la chute de l'appareil d'une table. En effet, le déplacement peut être engendré par un balourd dû à l'élément rotatif en fonctionnement.

La présente invention concerne également un appareil de préparation culinaire comprenant un ensemble d'interface et de commande tel que décrit ci-dessus.

De toute façon l'invention sera bien comprise à l'aide de la description qui suit en référence aux dessins schématiques annexés représentant, à titre d'exemple non limitatif, une forme d'exécution de ce procédé de commande, ce terminal et cet appareil de préparation culinaire
Figure 1 est une vue éclatée d'un appareil de préparation culinaire et d'un terminal.
Figure 2 est une vue en perspective de l'appareil de préparation culinaire.
Figure 3 est une vue de face d'une partie d'un boitier de l'appareil de préparation culinaire.
Figure 4 est un schéma d'un panneau de commande et d'une entité de commande de l'appareil de préparation culinaire.
Figure 5 est un schéma représentant les étapes d'un procédé de commande de l'appareil de préparation culinaire.

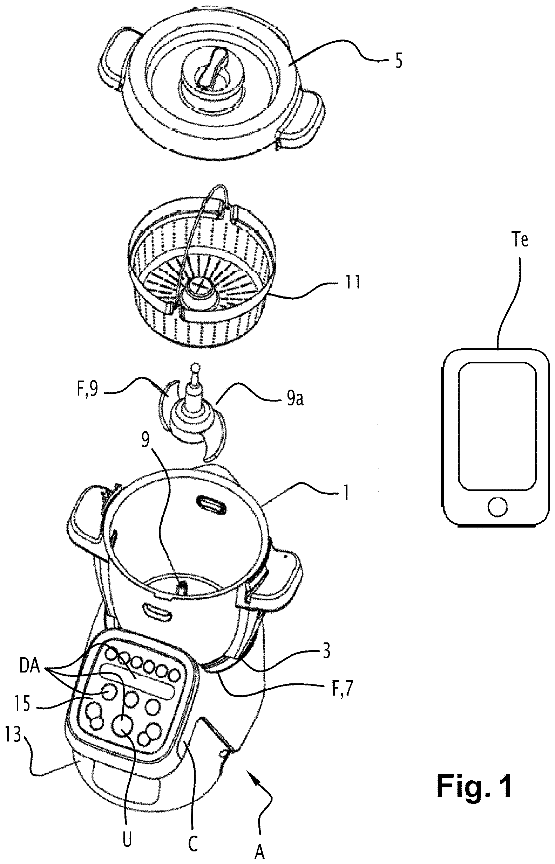

Comme illustré à la figure 1, un appareil de préparation culinaire A comprend un récipient de travail 1 qui est amovible. Ce récipient de travail 1 comprend un fond 3 et un couvercle de fermeture 5.

L'appareil de préparation culinaire A comprend des éléments fonctionnels F par exemple une plaque chauffante 7 agencée pour chauffer le fond du récipient 1 et un entraineur rotatif 9 agencé pour hacher et/ou agiter au moins un aliment disposé dans le récipient 1.

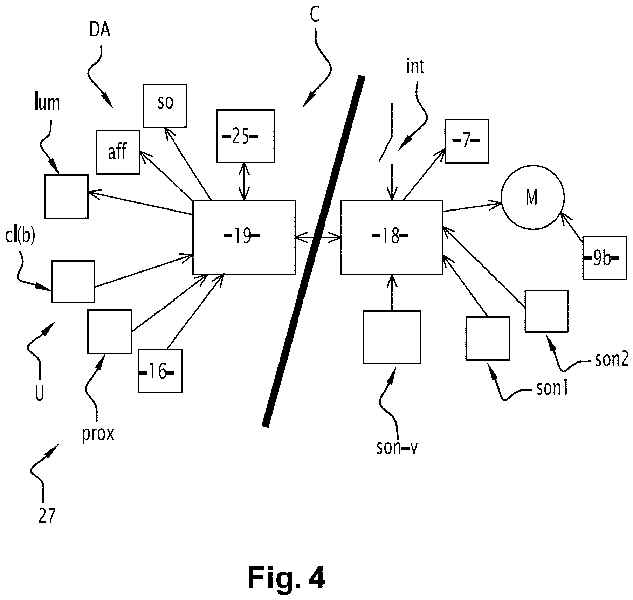

Comme illustré à la figure 4, l'entraineur rotatif 9 comprend un moteur M, une sonde de mesure de température dans le moteur 9a et élément 9a de hachage et/ ou d'agitation.

L'appareil de préparation culinaire A peut également comprendre un panier 11 agencé pour coopérer avec la partie supérieure du récipient de travail 1 et pour recevoir certains aliments, par exemple destinés à la cuisson à la vapeur.

L'appareil de préparation culinaire A comprend en outre un boitier 13 pourvu d'un panneau de commande 15 et d'une entité de commande C.

Le panneau de commande 15 comprend une interface utilisateur U agencée pour acquérir une saisie effectuée par un utilisateur. Pour ce faire l'interface utilisateur U comprend un clavier cl pourvu de boutons b. L'interface utilisateur U peut également comprendre un détecteur de mouvement ou détecteur de proximité prox agencé pour détecter une commande utilisateur correspondant à un mouvement de l'utilisateur.

De manière optionnelle, le panneau de commande 15 peut en outre comprendre un accéléromètre 16 agencé pour détecter le déplacement de l'appareil de préparation culinaire A.

Cette disposition est particulièrement intéressante pour réduire les risques de chute de l'appareil de préparation culinaire A. Ainsi si l'appareil de préparation culinaire A est disposé au bord d'une table et que son fonctionnement engendre un déplacement à cause d'un balourd dû à l'entraineur rotatif 9, l'entité de commande C est agencée pour stopper la rotation de l'entraineur rotatif 9.

L'interface utilisateur U peut également comprendre un dispositif d'acquisition sonore permettant une saisie vocale d'une commande utilisateur.

L'interface utilisateur U comprend en outre un dispositif d'avertissement DA. Comme illustré à la figure 4, le dispositif d'avertissement DA comprend par exemple un écran d'affichage aff, un dispositif d'avertissement sonore so et/ou un voyant lumineux lum qui peut être disposé sous un bouton b.

L'appareil de préparation culinaire A est agencé pour être commandé par un utilisateur pour l'élaboration de recettes de cuisine. L'utilisateur est aidé par l'entité de commande C qui dispose d'une mémoire dans laquelle est enregistrée un ensemble de recettes de cuisine. L'interface utilisateur U permet en ce sens d'assister l'utilisateur dans la réalisation d'une recette. L'utilisateur peut déclencher des tâches T destinées à être accomplies par les éléments fonctionnels F suivant le cours de la recette.

L'entité de commande C en combinaison avec l'interface utilisateur U offre ainsi à l'utilisateur une assistance dans l'élaboration d'une recette de cuisine.

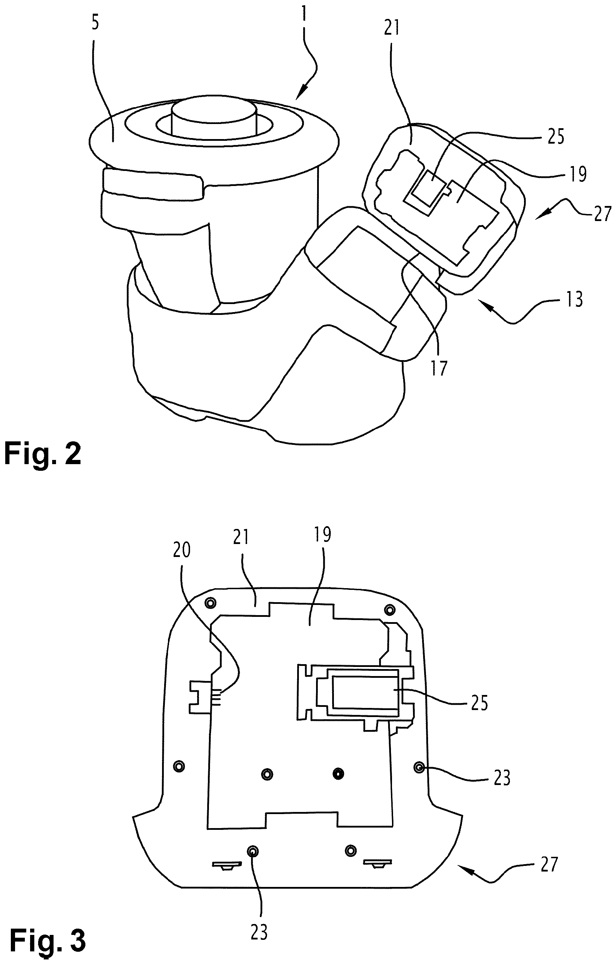

Comme illustré aux figures 2 à 4, le boitier 13 comprend une charnière 17 agencée pour permettre l'ouverture du boitier 13. L'entité de commande C comprend un circuit de puissance 18 et un circuit de commande 19.

Le circuit de puissance 18 est interne à l'appareil de préparation culinaire A. En outre, L'entité de commande C comprend un interrupteur int agencé pour alimenter le circuit de puissance en courant électrique en une position fermée.

L'entité de commande C comprend en outre deux sondes son1 et son2 de mesure de la température interne du récipient de cuissons, chacune étant agencé pour commander l'arrêt de l'alimentation électrique lorsqu'un seuil de température précis est atteint.

Un premier seuil de température correspondant à la sonde son1 est par exemple la température interne limite la plus élevée à ne pas dépasser lors du fonctionnement de l'appareil A lors d'une préparation culinaire. Un second seuil correspondant à la sonde son2 est par exemple la température limite lors de la marche à vide de l'appareil A.

L'entité de commande C comprend en outre une sonde son-v de mesure de la vitesse de rotation de l'élément rotatif 9, le circuit de puissance étant agencé pour couper l'alimentation électrique lorsque la vitesse mesurée est en dehors d'une plage déterminée.

Le circuit de commande 19 comprend une prise 20 pour être raccordé de manière amovible au circuit de puissance.

Comme illustré à la figure 3, le boitier 13 comprend un support 21 pourvu de fixations 23 telles que des vis. Le support 21 peut ainsi être solidarisé au reste du boitier 13. Le support 21 est également démontable. Le démontage est réalisé lorsque le boitier 13 est ouvert comme à la figure 2.

L'entité de commande C comprend en outre un circuit de communication 25 raccordé au circuit de commande 19 et agencé pour communiquer selon un protocole de communication connu, par exemple un protocole de communication bidirectionnel par ondes radio.

Le panneau de commande 15, le circuit de commande 19 et le circuit de communication 25 sont rapportés sur le support 21. Cet ensemble d'interface et de commande 27 représenté à la figure 3 et comprenant les éléments 15, 16 ,19 ,25 et 21, est ainsi démontable par rapport au reste de l'appareil de préparation culinaire A. Le démontage est symbolisé par un trait à la figure 4.

L'entité de commande C est agencée pour envoyer et recevoir des informations selon le protocole de communication connu grâce au circuit de communication 25.

Il est ainsi possible pour l'appareil de préparation culinaire A d'échanger des informations avec un terminal Te distant.

Comme illustré à la figure 1, un tel terminal Te est également agencé pour communiquer selon le protocole de communication avec l'appareil de préparation culinaire A et ainsi commander à distance l'appareil de préparation culinaire A comme détaillé ci-dessous.

La commande de l'appareil de préparation culinaire met en jeu un procédé de commande interne de l'appareil de préparation culinaire A réalisé par ledit appareil A et un procédé de commande réalisé par le terminal Te.

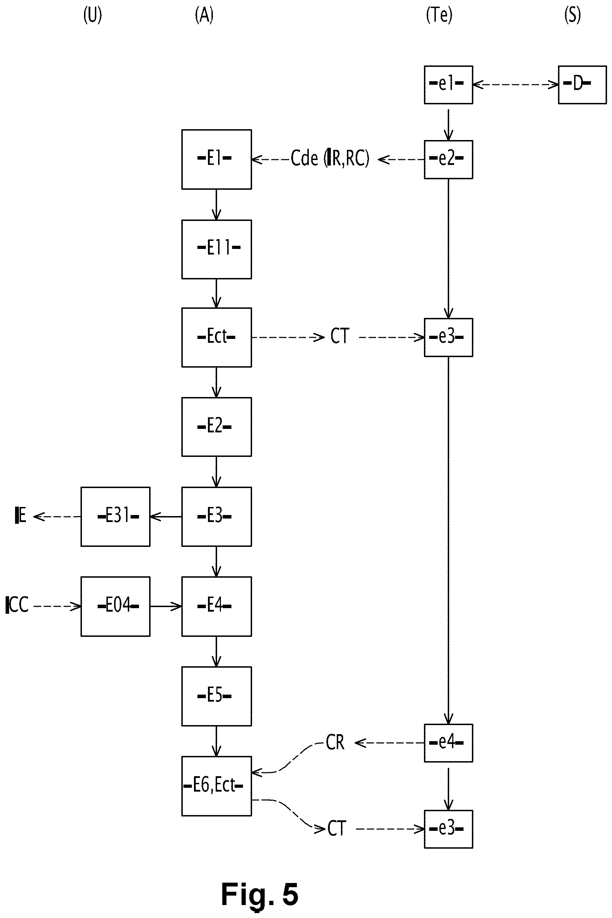

Comme illustré à la figure 5, le procédé de commande de l'appareil de préparation culinaire A par le terminal Te comprend une étape e1 de sélection d'une tâche déterminée T destinée à être accomplie par de l'appareil de préparation culinaire A.

Cette sélection est effectuée en utilisant une application exécutable installée sur le terminal Te. La tâche T déterminée peut correspondre à une étape d'une recette de cuisine.

Ainsi l'application permet à l'utilisateur de choisir une recette de cuisine, la sélection de chaque tâche T déterminée étant ensuite automatisée par l'application pour l'exécution complète de la recette.

L'utilisateur peut également avoir accès à une base de données D située dans un serveur S distant par exemple accessible par Internet. Le terminal Te est ainsi agencé pour communiquer avec le système de gestion de la base de données D et télécharger des données correspondant à des tâches T particulières ou des recettes particulières.

Le procédé de commande de l'appareil de préparation culinaire A par le terminal Te comprend une étape e2 consistant en l'envoi d'une information de commande Cde à destination de l'appareil de préparation culinaire A.

L'information de commande Cde comprend une instruction de commande IC relative à ladite tâche T à exécuter. L'information de commande Cde peut également comprendre une requête de contrôle RC.

La requête de contrôle RC a pour but d'obtenir un retour, c'est-à-dire une information de contrôle CT en provenance de l'appareil de préparation culinaire A.

L'information de contrôle CT peut correspondre à l'avancement de l'exécution de la tâche T déterminée ou à une anomalie de fonctionnement de l'appareil de préparation culinaire A qui a été détectée par un capteur dudit appareil. C'est le cas par exemple quand le couvercle de fermeture 5 est ouvert durant une tâche.

L'information de contrôle CT peut également signaler le bon fonctionnement de l'appareil de préparation culinaire.

Le procédé de commande interne de appareil de préparation culinaire A comprend ensuite une étape E1 de réception de l'information de commande Cde.

L'appareil de préparation culinaire réalise ensuite une étape de configuration E11 consistant à vérifier l'aptitude du ou des éléments fonctionnels F concernés par l'exécution de la tâche T déterminée.

Cette étape de configuration E11 consiste en outre à agencer le ou les éléments fonctionnels F concernés pour qu'ils soient disposés dans la configuration permettant d'exécuter la tâche T déterminée.

Cette étape d'agencement et de vérification est nécessaire du point de vue de la sécurité d'utilisation de l'appareil de préparation culinaire A.

A la figure 5, on a représenté une étape Ect d'émission d'une information de contrôle CT par l'entité de commande C correspondant à une requête de contrôle RC émise par le terminal Te.

Cette étape suit l'étape E11 dans le mode de réalisation présenté mais elle peut être réalisée à tout moment du fonctionnement de l'appareil de préparation culinaire A indépendamment de l'exécution d'une tâche T.

Cette étape Ect d'émission d'une information de contrôle CT peut être réalisée suite à la réception d'une requête de contrôle CT ou à l'initiative de l'appareil de préparation culinaire A, c'est-à-dire suite à un évènement particulier ou de manière régulière.

Le terminal Te procède ensuite à une étape e3 de réception de cette information de contrôle CT. L'application de gestion de l'exécution de la tâche est mise à jour grâce à cette information de contrôle CT.

Dans ce cas précis, l'information de contrôle CT peut comprendre un message du type : « l'appareil de préparation culinaire A a bien reçu l'information de commande Cde et est prêt à exécuter la tâche T correspondante ».

L'appareil de préparation culinaire A réalise ensuite une étape E2 de génération d'une information d'état IE. Cette information d'état IE est relative à l'aptitude du ou des éléments fonctionnels F déterminés à exécuter ladite instruction de commande IC précédemment reçue.

L'information d'état IE est ainsi à considérer comme une information simple pouvant avoir comme signification « oui, l'appareil de préparation culinaire A est prêt à exécuter la tâche T » ou « non, l'appareil n'est pas en un agencement lui permettant d'exécuter la tâche T ».

Cette information d'état IE est générée par l'entité de commande C puis dans une étape E3 transmise au dispositif d'avertissement DA qui dans une étape E31 émet un signal S relatif à ladite information d'état IE.

Cette information est émise lorsque le statut de l'information d'état IE est « oui, l'appareil de préparation culinaire est prêt à exécuter la tâche T ».

L'utilisateur doit être à proximité de l'appareil de préparation culinaire A pour percevoir le signal. Ainsi du point de vue de l'utilisateur, après avoir lancé l'exécution d'une tâche sur le terminal Te, il doit se rapprocher de l'appareil de préparation culinaire pour percevoir le signal S.

Ainsi l'utilisateur est apte à constater que tout est conforme à une bonne utilisation de l'appareil de préparation culinaire A et que l'agencement aux alentours de l'appareil A est optimal pour que la tâche T qui va être lancée se déroule dans de bonnes conditions.

C'est le cas par exemple, si, avant une tâche T de cuisson, aucun élément craignant la chaleur n'est à proximité immédiate de l'appareil A ou aucun enfant ne joue à proximité de l'appareil A.

L'utilisateur procède ensuite à la saisie d'une instruction confirmative de commande ICC au niveau de l'interface utilisateur U de l'appareil de préparation culinaire A.

Cette information confirmative de commande ICC est une simple validation qui ne nécessite pas de technicité spécifique. En effet, tous les paramètres de réglage relatifs à la tâche T à exécuter ont déjà été déterminés lors des étapes précédentes. Il ne s'agit donc pas d'un réglage.

L'information confirmative de commande ICC consiste par exemple en un appui sur un bouton qui peut également comprendre un élément lumineux du dispositif d'avertissement DA.

Ainsi la validation est très simple du point de vue de l'utilisateur : il voit un bouton s'allumer, ce qui lui signale que l'appareil de préparation culinaire A est prêt à l'exécution d'une tâche T, puis il appui sur ce bouton pour lancer l'exécution de la tâche T.

Cette saisie induit donc d'une étape E04 d'acquisition de l'instruction confirmative de commande ICC par l'interface utilisateur U qui est suivie par une étape E4 de réception d'une instruction confirmative de commande ICC par l'entité de commande C.

L'entité de commande C procède ensuite à étape E5 de déclenchement de l'exécution d'une tâche T déterminée correspondant à l'instruction de commande IC.

La tâche T déterminée est ensuite exécutée par le ou les éléments fonctionnels F concernés dans une étape E6. On a également représenté à la figure 5, l'envoi par le terminal T d'une requête de contrôle RC dans une étape e4. Le terminal reçoit ensuite une information de contrôle CT comme expliqué avant dans une étape e3.

Lors de l'étape E6, l'entité de contrôle C gère l'exécution de la tâche T. Ainsi le bon déroulement de l'étape est géré localement, ce qui évite toute interruption impromptue en cas de coupure de communication entre le terminal T et l'appareil de préparation culinaire A.

Le présent procédé offre donc les avantages d'une déportation d'une partie de la mémoire de l'entité de commande C, car les paramètres définissant les tâches T ne sont pas obligées d'être stockées localement.

Ainsi lorsque de nouvelles recettes comprenant un ensemble de tâches T ou lorsque de nouveaux éléments fonctionnels T peuvent être adaptés à l'appareil de préparation culinaire A, il n'est pas nécessaire de changer l'entité de commande C

De plus, cette déportation n'est que partielle car, lors du fonctionnement, à partir du moment où l'instruction de commande IC est parvenue à l'entité de commande C, l'appareil de préparation culinaire A gère seul l'exécution de la tâche T.

De plus, pour une sécurité améliorée, la présence d'un utilisateur à proximité de l'appareil A est nécessaire pour le déclenchement d'une tâche T, ce qui évite les démarrages intempestifs dus à une commande à distance.

## Revendications

1. Procédé de commande interne d'un appareil de préparation culinaire (A) comprenant une entité de commande (C) agencée pour recevoir des informations de commande (Cde) selon un protocole de communication et au moins un élément fonctionnel (F) apte à être commandé par l'entité de commande (C) et apte à réaliser une tâche (T), le procédé de commande interne de l'appareil de préparation culinaire (A) comprenant les étapes suivantes :
- (E1) réception d'une information de commande (Cde) comprenant une instruction de commande (IC) relative à au moins un élément fonctionnel (F) déterminé par l'entité de commande (C),
- (E2) génération d'une information d'état (IE) par l'entité de commande (C), l'information d'état (IE) étant relative à l'aptitude de l'au moins un élément fonctionnel (F) déterminé à exécuter ladite instruction de commande (IC),
- (E3) transmission de l'information d'état (IE) par l'entité de commande (C) à un dispositif d'avertissement (DA) de l'appareil de préparation culinaire (A), le dispositif d'avertissement (DA) étant apte à émettre un signal (S) relatif à ladite information d'état (IE),
- (E4) réception d'une instruction confirmative de commande (ICC) par l'entité de commande (C) en provenance d'une interface utilisateur (U) de l'appareil de préparation culinaire (A), l'interface utilisateur étant disposée sur ou ménagée dans un boitier de l'appareil de préparation culinaire, puis
- (E5) déclenchement de l'exécution d'une tâche (T) déterminée par l'au moins un élément fonctionnel (F) déterminé correspondant à l'instruction de commande (IC).

2. Procédé de commande interne de l'appareil de préparation culinaire (A) selon la revendication 1, comprenant, suite à l'étape (E3) de transmission de l'information d'état (IE) par l'entité de commande (C) au dispositif d'avertissement (DA), une étape (E31) d'émission du signal (S) relatif à ladite information d'état (IE) par le dispositif d'avertissement (DA), ledit signal (S) étant un signal physique perceptible par l'utilisateur.

3. Procédé de commande interne de l'appareil de préparation culinaire (A) selon l'une des revendications précédentes, dans lequel l'étape (E4) de réception d'une instruction confirmative de commande (ICC) par l'entité de commande (C) est précédée par une étape (E04) d'acquisition de l'instruction confirmative de commande (ICC) par l'interface utilisateur (U), ladite acquisition consistant à acquérir une saisie d'un utilisateur.

4. Procédé de commande interne d'un appareil de préparation culinaire (A) selon l'une des revendications précédentes, dans lequel l'étape (E1) de réception d'une information de commande (Cde) par l'entité de commande (C), est suivie par une étape de configuration (E11) réalisée par l'entité de commande (C) et consistant à vérifier l'aptitude de et/ou à agencer l'au moins un élément fonctionnel (F) pour l'exécution de la tâche (T) déterminée.

5. Procédé de commande interne d'un appareil de préparation culinaire (A) selon l'une des revendications précédentes, dans lequel l'étape de (E5) déclenchement de l'exécution d'une tâche (T) déterminée, est suivie par une étape (E6) d'exécution de la tâche (T) déterminée par l'au moins un élément fonctionnel (F) déterminé correspondant à l'instruction de commande (IC), la tâche (T) déterminée correspondant à l'exécution par l'au moins un élément fonctionnel (F) déterminé d'au moins une opération élémentaire selon un temps de fonctionnement déterminée et/ou selon une puissance déterminée et/ou selon un réglage déterminé par ledit au moins un élément fonctionnel (F) déterminé.

6. Procédé de commande interne d'un appareil de préparation culinaire (A) selon la revendication précédente, dans lequel l'opération élémentaire correspond à une étape de préparation culinaire d'au moins un aliment disposé dans au moins un récipient de travail de l'appareil de préparation culinaire.

7. Procédé de commande interne d'un appareil de préparation culinaire (A) selon l'une des revendications 5 ou 6, dans lequel l'entité de commande (C) est apte à réaliser l'interruption et/ou la reprise de ladite tâche (T) déterminée durant l'étape (E6) d'exécution de la tâche (T) déterminée.

8. Procédé de commande interne d'un appareil de préparation culinaire (A) selon l'une des revendications précédentes, comprenant une étape (Ect) d'émission d'une information de contrôle (CT) par l'entité de commande (C) correspondant à une requête de contrôle (RC) reçue par l'entité de commande (C) et concernant l'avancement de l'exécution de la tâche (T) déterminée et/ou concernant une anomalie de fonctionnement de l'appareil de préparation culinaire et/ou une conformité de fonctionnement de l'appareil de préparation culinaire.

9. Appareil de préparation culinaire agencé pour exécuter les étapes du procédé de commande interne selon l'une des revendications précédentes.

## Patentansprüche

1. Verfahren zur internen Steuerung eines Lebensmittelverarbeitungsgerätes (A), umfassend eine Steuereinheit (C), die ausgeführt ist, um Steuerinformationen (Cde) gemäß einem Kommunikationsprotokoll zu empfangen, und mindestens ein Betriebselement (F), das imstande ist, durch die Steuereinheit (C) gesteuert zu werden, und imstande ist, einen Arbeitsauftrag (T) durchzuführen, wobei das Verfahren zur internen Steuerung des Lebensmittelverarbeitungsgerätes (A) die folgenden Schritte umfasst:
- (E1) Empfangen einer Steuerinformation (Cde), umfassend eine Steueranweisung (IC) in Bezug auf mindestens ein Betriebselement (F), das durch die Steuereinheit (C) bestimmt wird,
- (E2) Erzeugen einer Zustandsinformation (IE) durch die Steuereinheit (C), wobei sich die Zustandsinformation (IE) auf die Eignung des mindestens einen bestimmten Betriebselements (F) bezieht, die Steueranweisung (IC) auszuführen,
- (E3) Übertragen der Zustandsinformation (IE) durch die Steuereinheit (C) an eine Ankündigungsvorrichtung (DA) des Lebensmittelverarbeitungsgerätes (A), wobei die Ankündigungsvorrichtung (DA) imstande ist, ein Signal (S) in Bezug auf die Zustandsinformation (IE) auszugeben,
- (E4) Empfangen einer Steuerbestätigungsanweisung (ICC) durch die Steuereinheit (C) von einer Benutzeroberfläche (U) des Lebensmittelverarbeitungsgerätes (A), wobei die Benutzeroberfläche auf einem Gehäuse des Lebensmittelverarbeitungsgerätes angeordnet, oder darin eingerichtet ist, danach
- (E5) Auslösen der Ausführung eines bestimmten Arbeitsauftrags (T) durch das mindestens eine bestimmte Betriebselement (F) entsprechend der Steueranweisung (IC).

2. Verfahren zur internen Steuerung des Lebensmittelverarbeitungsgerätes (A) nach Anspruch 1, das nach dem Schritt (E3) zum Übertragen der Zustandsinformation (IE) durch die Steuereinheit (C) an die Ankündigungsvorrichtung (DA) einen Schritt (E31) zum Senden des Signals (S) in Bezug auf die Zustandsinformation (IE) durch die Ankündigungsvorrichtung (DA) umfasst, wobei das Signal (S) ein von dem Nutzer wahrnehmbares physisches Signal ist.

3. Verfahren zur internen Steuerung des Lebensmittelverarbeitungsgerätes (A) nach einem der vorstehenden Ansprüche, wobei dem Schritt (E4) zum Empfangen einer Steuerbestätigungsanweisung (ICC) durch die Steuereinheit (C) ein Schritt (E04) zur Erfassung der Steuerbestätigungsanweisung (ICC) durch die Benutzeroberfläche (U) vorangeht, wobei die Erfassung darin besteht, eine Eingabe eines Nutzers zu erfassen.

4. Verfahren zur internen Steuerung eines Lebensmittelverarbeitungsgerätes (A) nach einem der vorstehenden Ansprüche, wobei auf den Schritt (E1) zum Empfangen einer Steuerinformation (Cde) durch die Steuereinheit (C) ein Konfigurationsschritt (E11) folgt, der von der Steuereinheit (C) durchgeführt wird, und darin besteht, die Eignung zu überprüfen, und/oder das mindestens eine Betriebselement (F) zur Ausführung des bestimmten Arbeitsauftrags (T) anzuordnen.

5. Verfahren zur internen Steuerung eines Lebensmittelverarbeitungsgerätes (A) nach einem der vorstehenden Ansprüche, wobei auf den Schritt (E5) zum Auslösen der Ausführung eines bestimmten Arbeitsauftrags (T) ein Schritt (E6) zur Ausführung des bestimmten Arbeitsauftrags (T) durch das mindestens eine bestimmte Betriebselement (F) entsprechend der Steueranweisung (IC) folgt, wobei der bestimmte Arbeitsauftrag (T) der Ausführung durch das mindestens eine bestimmte Betriebselement (F) mindestens eines elementaren Vorgangs gemäß einer bestimmten Betriebszeit und/oder gemäß einer bestimmten Leistung und/oder gemäß einer bestimmten Einstellung durch das mindestens eine bestimmte Betriebselement (F) entspricht.

6. Verfahren zur internen Steuerung eines Lebensmittelverarbeitungsgerätes (A) nach dem vorstehenden Anspruch, wobei der elementare Vorgang einem Lebensmittelverarbeitungsschritt von mindestens einem Nahrungsmittel entspricht, das in mindestens einem Arbeitsbehälter des Lebensmittelverarbeitungsgerätes angeordnet ist.

7. Verfahren zur internen Steuerung eines Lebensmittelverarbeitungsgerätes (A) nach einem der Ansprüche 5 oder 6, wobei die Steuereinheit (C) imstande ist, die Unterbrechung und/oder die Wiederaufnahme des bestimmten Arbeitsauftrags (T) im Schritt (E6) zur Ausführung des bestimmten Arbeitsauftrags (T) durchzuführen.

8. Verfahren zur internen Steuerung eines Lebensmittelverarbeitungsgerätes (A) nach einem der vorstehenden Ansprüche, umfassend einen Schritt (Ect) zum Senden einer Kontrollinformation (CT) durch die Steuereinheit (C) entsprechend einer Kontrollanforderung (RC), die von der Steuereinheit (C) empfangen wird, und hinsichtlich des Fortschritts der Ausführung des bestimmten Arbeitsauftrags (T) und/oder hinsichtlich einer Betriebsanomalie des Lebensmittelverarbeitungsgerätes und/oder einer Betriebskonformität des Lebensmittelverarbeitungsgerätes.

9. Lebensmittelverarbeitungsgerät, das ausgeführt ist, um die Schritte des Verfahrens zur internen Steuerung nach einem der vorstehenden Ansprüche auszuführen.

## Claims

1. An internal control method of a food preparation appliance (A) comprising a control entity (C) arranged to receive control information (Cde) according to a communication protocol and at least one functional element (F) capable of being controlled by the control entity (C) and capable of carrying out a task (T), the internal control method of the food preparation appliance (A) comprising the following steps of:
- (E1) receiving a control information (Cde) comprising a control instruction (IC) relating to at least one determined functional element (F) by the control entity (C),
- (E2) generating a status information (IE) by the control entity (C), the status information (IE) relating to the ability of the at least one determined functional element (F) to execute said control instruction (IC),
- (E3) transmitting the status information (IE) by the control entity (C) to a warning device (DA) of the food preparation appliance (A), the warning device (DA) being capable of emitting a signal (S) relating to said status information (IE),
- (E4) receiving a control confirmatory instruction (ICC) by the control entity (C) from a user interface (U) of the food preparation appliance (A), the user interface being disposed on or provided in a case of the food preparation appliance, then
- (E5) triggering the execution of a determined task (T) by the at least one determined functional element (F) corresponding to the control instruction (IC).

2. The internal control method of the food preparation appliance (A) according to claim 1, comprising, following the step (E3) of transmitting the status information (IE) by the control entity (C) to the warning device (DA), a step (E31) of emitting the signal (S) relating to said status information (IE) by the warning device (DA), said signal (S) being a user-perceptible physical signal.

3. The internal control method of the food preparation appliance (A) according to any of the preceding claims, wherein the step (E4) of receiving a control confirmatory instruction (ICC) by the control entity (C) is preceded by a step (E04) of acquiring the control confirmatory instruction (ICC) by the user interface (U), said acquisition consisting in acquiring a user input.

4. The internal control method of a food preparation appliance (A) according to any of the preceding claims, wherein the step (E1) of receiving a control information (Cde) by the control entity (C), is followed by a configuration step (E11) carried out by the control entity (C) and consisting in verifying the ability of and/or arranging the at least one functional element (F) for the execution of the determined task (T).

5. The internal control method of a food preparation appliance (A) according to any of the preceding claims, wherein the step (E5) of triggering the execution of a determined task (T), is followed by a step (E6) of executing the determined task (T) by the at least one determined functional element (F) corresponding to the control instruction (IC), the determined task (T) corresponding to the execution by the at least one determined functional element (F) of at least one elementary operation according to a determined operating time and/or according to a determined power and/or according to a determined setting by said at least one determined functional element (F).

6. The internal control method of a food preparation appliance (A) according to the preceding claim, wherein the elementary operation corresponds to a step of food preparation of at least one food disposed in at least one working container of the food preparation appliance.

7. The internal control method of a food preparation appliance (A) according to any of claims 5 or 6, wherein the control entity (C) is capable of carrying out the interruption and/or the resumption of said determined task (T) during the step (E6) of executing the determined task (T).

8. The internal control method of a food preparation appliance (A) according to any of the preceding claims, comprising a step (Ect) of emitting a monitoring information (CT) by the control entity (C) corresponding to a monitoring request (RC) received by the control entity (C) and concerning the progress of the execution of the determined task (T) and/or concerning an operating fault of the food preparation appliance and/or an operating compliance of the food preparation appliance.

9. A food preparation appliance arranged to execute the steps of the internal control method according to any of the preceding claims.
